# EUROPÄISCHE PATENTSCHRIFT

(11) **EP 3 207 544 B1**
(45) Veröffentlichungstag und Bekanntmachung des Hinweises auf die Patenterteilung: **07.06.2023**
(21) Anmeldenummer: 15787153.4
(22) Anmeldetag: 16.10.2015
(51) Int. Cl.: G11B 27/031, G11B 27/10, G10H 1/00

(54) **SYNCHRONES AUFNEHMEN VON AUDIO MITTELS DRAHTLOSER DATENÜBERTRAGUNG**
SYNCHRONOUS RECORDING OF AUDIO BY MEANS OF WIRELESS DATA TRANSMISSION
ENREGISTREMENT SYNCHRONE DE SIGNAUX AUDIO AU MOYEN D'UNE TRANSMISSION DE DONNÉES SANS FIL

(30) Priorität: 17.10.2014 DE 102014115148
(43) Veröffentlichungstag der Anmeldung: 23.08.2017
(73) Patentinhaber: Tymphany Worldwide Enterprises Limited, Grand Cayman, 1-1104 (KY)
(72) Erfinder: SONNLEITNER, Philipp, 8200 Gleisdorf (AT)
(74) Vertreter: Meissner Bolte Partnerschaft mbB
(86) Internationale Anmeldenummer: PCT/EP2015/074006
(87) Internationale Veröffentlichungsnummer: WO 2016/059211

(56) Entgegenhaltungen:
- JP-A- 2005 128 296
- US-A1- 2003 164 084
- US-A1- 2007 140 510
- Anonymous: "Metronome touch - iPad Apps & Games on Brothersoft.com", , 31. Mai 2014 (2014-05-31), XP055238930, Gefunden im Internet: URL:http://ipad.brothersoft.com/metronome_ touch-327560.html [gefunden am 2016-01-06]

## Beschreibung

### Gebiet der Erfindung

Die Erfindung betrifft das Gebiet der synchronen Aufnahme von Audio, insbesondere ein Verfahren und ein System zur synchronen Aufnahme von Audio mittels drahtloser Datenübertragung.

### Hintergrund

Beim gleichzeitigen Aufnehmen von Audio mit mehreren separaten Aufnahmevorrichtungen (Mikrofonen), zum Beispiel durch zwei oder mehr Musiker oder Sänger, die jeweils eine Aufnahmevorrichtung verwenden, ist es üblich, dass jeder Musiker oder Sänger eine gemeinsame Referenz (zum Beispiel ein Metronom oder eine früher aufgenommene Tonspur) in seinen Kopfhörer hört und relativ zu dieser Referenz spielt oder singt. Die einzelnen Aufnahmen können dann an eine Mastervorrichtung übertragen und dort zusammengebracht werden, um die fertige Aufnahme zu erstellen.

Es wäre aus mehreren Gründen praktisch, wenn die Verbindung zwischen jeder einzelnen Aufnahmevorrichtung und der Mastervorrichtung drahtlos sein könnte. Dies würde zum Beispiel eine hohe Flexibilität bei der Positionierung der Aufnahmevorrichtungen gewähren. Da aber die meisten Techniken (zum Beispiel Bluetooth) zur drahtlosen Datenübertragung Latenz aufweisen, die für jede einzelne Verbindung zu unterschiedlichen Verzögerungen bei der Datenübertragung führen kann, ist es aber mit Schwierigkeiten verbunden, die erforderliche Synchronisation der Aufnahmevorrichtungen zu erreichen. Selbst kleine zeitliche Verschiebungen in Millisekunden-Bereich machen es nahezu unmöglich für Musiker und Sänger, eine gelungene Aufnahme zu erstellen. Des Weiteren besteht bei Drahtlosverbindungen auch die Gefahr, dass die Verbindung unterbrochen wird, was zu Datenverlust führen kann.

Die JP 2005 128296 A (YAMAHA CORP) 19. Mai 2005 (19.05.2005), welche als relevanter Stand der Technik angesehen wird, offenbart ein Audioaufnahmesystem zur Aufnahme von Musikinstrumenten. Eine Mastervorrichtung erzeugt und überträgt drahtlos ein Referenzsignal an mehrere Aufnahmevorrichtungen unter Berücksichtigung von jeweiligen Kommunikationsverzögerungszeiten, die durch Übertragung eines Messsignals an die Aufnahmevorrichtungen gemessen werden.

Der vorliegenden Erfindung liegt die Aufgabe zugrunde, verbesserte Techniken zur Aufnahme von Audio mit drahtloser Datenübertragung bereitzustellen.

### Zusammenfassung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Verfahren zur synchronen Aufnahme von Audio beschrieben. Das beschriebene Verfahren weist folgendes auf: (a) Aufbauen einer ersten drahtlosen Datenübertragungsverbindung zwischen einer Mastervorrichtung und einer ersten Aufnahmevorrichtung, (b) Aufbauen einer zweiten drahtlosen Datenübertragungsverbindung zwischen der Mastervorrichtung und einer zweiten Aufnahmevorrichtung, (c) Bestimmen einer ersten Datenübertragungsverzögerung für die erste Datenübertragungsverbindung, (d) Bestimmen einer zweiten Datenübertragungsverzögerung für die zweite Datenübertragungsverbindung, (e) Übertragen vorbestimmter Referenzdaten von der Mastervorrichtung an die erste Aufnahmevorrichtung und an die zweite Aufnahmevorrichtung, (f) bei der ersten Aufnahmevorrichtung: Abspielen der vorbestimmten Referenzdaten und Aufnehmen erster Aufnahmedaten, und (g) bei der zweiten Aufnahmevorrichtung: Abspielen der vorbestimmten Referenzdaten und Aufnehmen zweiter Aufnahmedaten, (h) wobei beim

Übertragen der vorbestimmten Referenzdaten eine Differenz zwischen der ersten Datenübertragungsverzögerung und der zweiten Datenübertragungsverzögerung derart berücksichtigt wird, dass das Abspielen der vorbestimmten Referenzdaten bei der ersten Aufnahmevorrichtung und der zweiten Aufnahmevorrichtung synchron erfolgt.

Dem beschriebenen Verfahren liegt die Erkenntnis zugrunde, dass die erste Übertragungsverzögerung (für die erste drahtlose Datenübertragungsverbindung) und die zweite Übertragungsverzögerung (für die zweite drahtlose Datenübertragungsverbindung) bestimmt werden können, und dass synchrones Abspielen der vorbestimmten Referenzdaten bei den beiden (ersten und zweiten) Aufnahmevorrichtung durch Berücksichtigung der Differenz zwischen den bestimmten Übertragungsverzögerungen erreicht werden kann. Mit diesem Verfahren können einfache und preisgünstige Aufnahmevorrichtungen dazu gebracht werden, vorbestimmte Referenzdaten synchron abzuspielen, so dass mehrere Musiker oder Sänger gleichzeitig ihre jeweiligen Beiträge zu einer Aufnahme aufnehmen können.

In diesem Dokument bezeichnet "vorbestimmte Referenzdaten" insbesondere Daten, die ein geeignetes Referenzsignal darstellen, wie zum Beispiel ein Metronomsignal, welches, wenn es (zum Beispiel durch Kopfhörer) abgespielt wird, einem Musiker oder Sänger ermöglicht, seinen Beitrag zur richtigen Zeit und im vorgesehen Tempo aufzunehmen.

Das erfindungsgemäße Verfahren wird damit eingeleitet, dass die erste drahtlose Datenübertragungsverbindung zwischen der Mastervorrichtung und der ersten Aufnahmevorrichtung und die zweite drahtlose Datenübertragungsverbindung zwischen der Mastervorrichtung und der zweiten Aufnahmevorrichtung aufgebaut werden. Die drahtlose Datenübertragungsverbindungen können insbesondere Bluetooth-Verbindungen sein. Dann wird die Datenübertragungsverzögerung für jede Datenübertragungsverbindung bestimmt. Mit anderen Worten wird es bestimmt, wie lange eine Datenübertragung zwischen Mastervorrichtung und (erster und zweiter) Aufnahmevorrichtung dauert. Nachdem die drahtlosen Verbindungen aufgebaut und die entsprechenden Datenübertragungsverzögerungen bestimmt worden sind, werden die vorbestimmten Referenzdaten von der Mastervorrichtung an sowohl die erste als auch die zweite Aufnahmevorrichtung übertragen. Die vorbestimmten Referenzdaten werden dann von jeder Aufnahmevorrichtung synchron abgespielt während jede Aufnahmevorrichtung entsprechende Aufnahmedaten aufnimmt. Das Abspielen der Referenzdaten kann zum Beispiel durch Kopfhörer oder durch einen Monitorlautsprecher erfolgen, der eventuell so angebracht ist, dass das wiedergegebene Referenz-Audiosignal die Aufnahme nicht störend beeinflusst. Das synchrone Abspielen der Referenzdaten wird durch Berücksichtigung der Datenübertragungsverzögerungen erreicht. Somit können beide Aufnahmevorrichtungen gleichzeitig individuelle Aufnahmen machen, die mit den vorbestimmten Referenzdaten synchronisiert sind.

Gemäß einem Ausführungsbeispiel der Erfindung leitet die Mastervorrichtung das Übertragen der vorbestimmten Referenzdaten an die erste Aufnahmevorrichtung zu einem ersten Zeitpunkt und das Übertragen der vorbestimmten Referenzdaten an die zweite Aufnahmevorrichtung zu einem zweiten Zeitpunkt ein, wobei der zeitliche Abstand zwischen dem ersten Zeitpunkt und dem zweiten Zeitpunkt gleich der Differenz zwischen der ersten Datenübertragungsverzögerung und der zweiten Datenübertragungsverzögerung ist.

In diesem Ausführungsbeispiel wird die Differenz zwischen der ersten Datenübertragungsverzögerung und der zweiten Datenübertragungsverzögerung dazu verwendet, das Übertragen der vorbestimmten Referenzdaten an die erste und zweite Aufnahmevorrichtung zeitlich zu versetzen, so dass die vorbestimmten Referenzdaten gleichzeitig bei den beiden Aufnahmevorrichtungen ankommen, damit diese auch gleichzeitig (synchron) abgespielt werden können.

Dieses Ausführungsbeispiel weist insbesondere den Vorteil auf, dass die Aufnahmevorrichtungen nicht zur Erreichung der Synchronisation beitragen müssen, da die Mastervorrichtung für die Synchronisation sorgt.

Gemäß einem weiteren Ausführungsbeispiel der Erfindung überträgt die Mastervorrichtung einen ersten Offsetwert zusammen mit den Referenzdaten an die erste Aufnahmevorrichtung und einen zweiten Offsetwert zusammen mit den Referenzdaten an die zweite Aufnahmevorrichtung, wobei die erste Aufnahmevorrichtung das Abspielen der vorbestimmten Referenzdaten entsprechend dem ersten Offsetwert verzögert, wobei die zweite Aufnahmevorrichtung das Abspielen der vorbestimmten Referenzdaten entsprechend dem zweiten Offsetwert verzögert, und wobei eine Differenz zwischen dem ersten Offsetwert und dem zweiten Offsetwert gleich der Differenz zwischen der ersten Datenübertragungsverzögerung und der zweiten Datenübertragungsverzögerung ist.

In diesem Ausführungsbeispiel wird die Differenz zwischen der ersten Datenübertragungsverzögerung und der zweiten Datenübertragungsverzögerung dazu verwendet, einen Offsetwert für jede Aufnahmevorrichtung zu berechnen und zusammen mit den vorbestimmten Referenzdaten an die entsprechende Aufnahmevorrichtung zu übermitteln. Jede Aufnahmevorrichtung verzögert dann das Abspielen der empfangenen vorbestimmten Referenzdaten entsprechend dem erhaltenen Offsetwert. Damit werden die vorbestimmten Referenzdaten gleichzeitig bei den beiden Aufnahmevorrichtungen abgespielt.

Gemäß einem weiteren Ausführungsbeispiel der Erfindung werden die ersten Aufnahmedaten in einem Speicher der ersten Aufnahmevorrichtung gespeichert und/oder die zweiten Aufnahmedaten werden in einem Speicher der zweiten Aufnahmevorrichtung gespeichert.

Die Aufnahmedaten können zum Beispiel als digitale Audiodaten mit hoher Auflösung (z.B. 24 bit, 96 kHz) auf einer SD-Karte in der Aufnahmevorrichtung gespeichert werden. Alternativ können die Aufnahmedaten auch in einem geeigneten komprimierten Datenformat (z.B. AAC, MP3, MP4 usw.) gespeichert werden. Die Aufnahmedaten können auch gleichzeitig sowohl mit hoher Auflösung als auch komprimiert gespeichert werden.

Gemäß einem weiteren Ausführungsbeispiel der Erfindung weist das Verfahren ferner folgendes auf: (a) Übertragen der ersten Aufnahmedaten von der ersten Aufnahmevorrichtung an die Mastervorrichtung und/oder (b) Übertragen der zweiten Aufnahmedaten von der zweiten Aufnahmevorrichtung an die Mastervorrichtung.

Durch Übertragung der jeweiligen Aufnahmedaten an die Mastervorrichtung kann die Mastervorrichtung die Aufnahmedaten zusammenfügen, um die komplette Aufnahme zu erstellen.

Gemäß einem weiteren Ausführungsbeispiel der Erfindung erfolgt das Übertragen der ersten und/oder zweiten Aufnahmedaten kontinuierlich.

In diesem Ausführungsbeispiel werden die Aufnahmedaten grundsätzlich ununterbrochen gestreamt. Sollte eine der Datenübertragungsverbindungen ausfallen, können die fehlende Daten später aus dem Speicher der jeweiligen Aufnahmevorrichtung ausgelesen werden und erneut gestreamt, um mit den schon übertragenen Aufnahmedaten zusammengefügt zu werden.

Gemäß einem weiteren Ausführungsbeispiel der Erfindung erfolgt das Übertragen der ersten und/oder zweiten Aufnahmedaten zeitlich aufgeteilt.

In diesem Ausführungsbeispiel werden die Aufnahmedaten in Pakete mit fester oder variabler Größe übertragen. Die Übertragung kann regelmäßig, das heißt mit festem zeitlichem Abstand, oder unregelmäßig stattfinden. Im letzteren Fall können die Aufnahmedaten, die im Speicher der Aufnahmevorrichtung (zwischen)gespeichert sind, auch erst nach Abschluss des gesamten Aufnahmevorgangs übertragen werden.

Gemäß einem weiteren Ausführungsbeispiel der Erfindung weist das Bestimmen der ersten Datenübertragungsverzögerung folgendes auf: (a) Übertragen eines ersten Referenzsignals von der Mastervorrichtung an die erste Aufnahmevorrichtung, (b) Empfangen eines ersten Antwortsignals von der ersten Aufnahmevorrichtung bei der Mastervorrichtung und (c) Bestimmen der ersten Datenübertragungsverzögerung basierend auf einer ersten Zeitdauer zwischen dem Übertragen des ersten Referenzsignals bis zum Empfangen des ersten Antwortsignals und/oder das Bestimmen der zweiten Datenübertragungsverzögerung weist folgendes auf: (d) Übertragen eines zweiten Referenzsignals von der Mastervorrichtung an die zweite Aufnahmevorrichtung, (e) Empfangen eines zweiten Antwortsignals von der zweiten Aufnahmevorrichtung bei der Mastervorrichtung und (f) Bestimmen der zweiten Datenübertragungsverzögerung basierend auf einer zweiten Zeitdauer zwischen dem Übertragen des zweiten Referenzsignals bis zum Empfangen des zweiten Antwortsignals.

Mit anderen Worten bestimmt die Mastervorrichtung die jeweilige Datenübertragungsverzögerung durch Bestimmung der Zeitdauer zwischen Absenden eines Referenzsignals und Empfangen eines entsprechenden Antwortsignals von der Aufnahmevorrichtung.

Gemäß einem weiteren Ausführungsbeispiel der Erfindung ist das erste Referenzsignal ein erstes digitales Signal, das über die erste Datenübertragungsverbindung übertragen wird, und/oder das zweite Referenzsignal ist ein zweites digitales Signal, das über die erste Datenübertragungsverbindung übertragen wird.

In diesem Ausführungsbeispiel wird sowohl das digitale Referenzsignal als auch das entsprechende Antwortsignal über die drahtlose Datenübertragungsverbindung übermittelt. Folglich kann die Datenübertragungsverzögerung im Wesentlichen als die Hälfte der gemessenen Zeitdauer bestimmt werden. Eventuell kann die notwendige Bearbeitungszeit bei der Aufnahmevorrichtung auch berücksichtigt werden.

Gemäß einem weiteren Ausführungsbeispiel der Erfindung ist das erste Referenzsignal ein erstes akustisches Signal, das von einem Lautsprecher der Mastervorrichtung ausgegeben wird, und das erste Antwortsignal weist eine Aufnahme des ersten akustischen Signals auf und/oder das zweite Referenzsignal ist ein zweites akustisches Signal ist, das von dem Lautsprecher der Mastervorrichtung ausgegeben wird, und das zweite Antwortsignal weist eine Aufnahme des zweiten akustischen Signals auf.

In diesem Ausführungsbeispiel wird nur das Antwortsignal über die drahtlose Datenübertragungsverbindung übermittelt. Folglich kann die Datenübertragungsverzögerung im Wesentlichen als die gemessene Zeitdauer bestimmt werden. Eventuell kann auch hier die notwendige Bearbeitungszeit bei der Aufnahmevorrichtung berücksichtigt werden.

Gemäß einem zweiten Aspekt der Erfindung wird ein System zum synchronen Aufnehmen von Audio beschrieben. Das beschriebene System weist (a) eine erste Aufnahmevorrichtung, (b) eine zweite Aufnahmevorrichtung und (c) eine Mastervorrichtung auf, wobei die erste Aufnahmevorrichtung, die zweite Aufnahmevorrichtung und die Mastervorrichtung zum Durchführen des Verfahrens gemäß dem ersten Aspekt oder einem der obigen Ausführungsbeispiele eingerichtet sind.

Jede der Aufnahmevorrichtungen weist insbesondere eine Mikrofoneinheit zum Aufnehmen von Audiodaten, eine Abspieleinheit (zum Beispiel Kopfhörerausgang und/oder Lautsprecher) zum Abspielen von Audiodaten, einen Datenspeicher, eine Datenübertragungseinheit zur drahtlosen Datenkommunikation und eine Steuereinheit auf.

Die Mastervorrichtung weist insbesondere eine Steuereinheit, einen Datenspeicher und eine Datenübertragungseinheit zur drahtlosen Datenkommunikation auf. Die Mastervorrichtung mag insbesondere als ein digitales Gerät (z.B. Smartphone, Tablet oder PC) mit einer installierten Anwendung (App) implementiert sein.

Obwohl in den oben beschriebenen Aspekten und Ausführungsbeispielen immer wieder zwei Aufnahmevorrichtungen beschrieben wurden, sollte es für den Fachmann klar sein, dass die Erfindung ohne Weiteres auf mehr als zwei Aufnahmevorrichtungen erweitert werden kann. Dazu muss lediglich die Datenübertragungsverzögerung für jede weitere Aufnahmevorrichtung in der gleichen Weise bestimmt und berücksichtigt werden, damit das Abspielen der vorbestimmten Referenzdaten auf allen Aufnahmegeräten synchron erfolgt.

### Kurze Beschreibung der Zeichnungen

Figur 1 zeigt ein System gemäß einer Ausführungsform.
Figur 2 zeigt eine Aufnahmevorrichtung des in der Figur 1 gezeigten Systems.

### Detaillierte Beschreibung

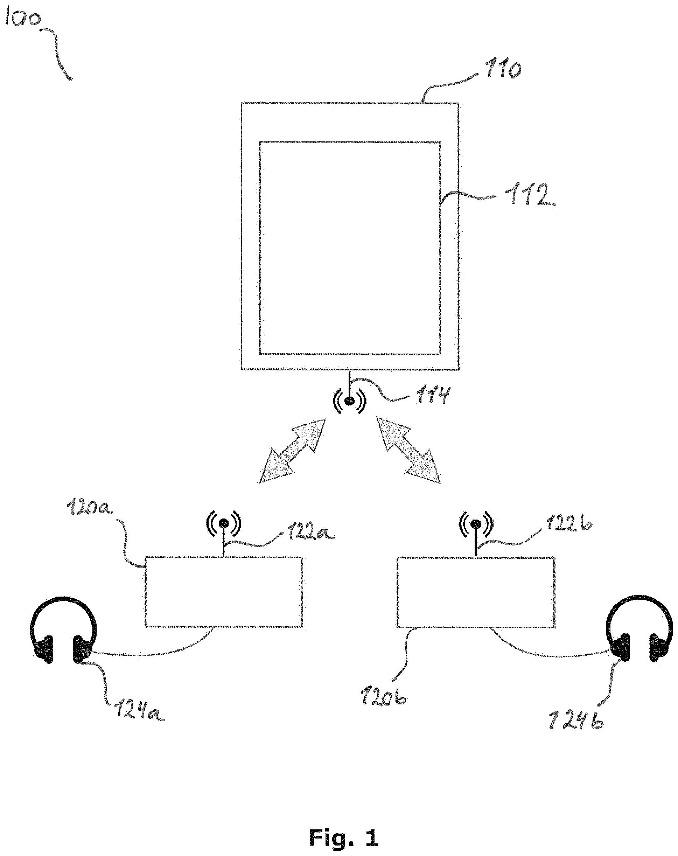

Figur 1 zeigt ein System 100 zur synchronen Aufnahme von Audio gemäß einer Ausführungsform. Das System 100 weist eine Mastervorrichtung 110, eine erste Aufnahmevorrichtung 120a und eine zweite Aufnahmevorrichtung 120b auf. Die Mastervorrichtung 110 ist ein digitales Gerät (zum Beispiel ein Smartphone mit iOS oder Android-Operativsystem) auf dem eine Anwendung (App) 112 installiert ist. Die Anwendung 112 ist zum Durchführen der weiter unten beschriebenen Funktionalität eingerichtet. Die Mastervorrichtung 110 weist ferner eine Antenne 114 auf zur drahtlosen Datenkommunikation mittels Bluetooth.

Jede der beiden Aufnahmevorrichtungen 120a, 120b weisen eine Antenne 122a, 122b zur drahtlosen Datenkommunikation mit der Mastervorrichtung 110 (via Antenne 114) und einen Anschluss für Kopfhörer 124a, 124b zur Wiedergabe von Audio an einen Benutzer. Obwohl die Figur 1 nur zwei Aufnahmevorrichtungen 120a, 120b zeigt, kann das System beliebig viele Aufnahmevorrichtungen aufweisen.

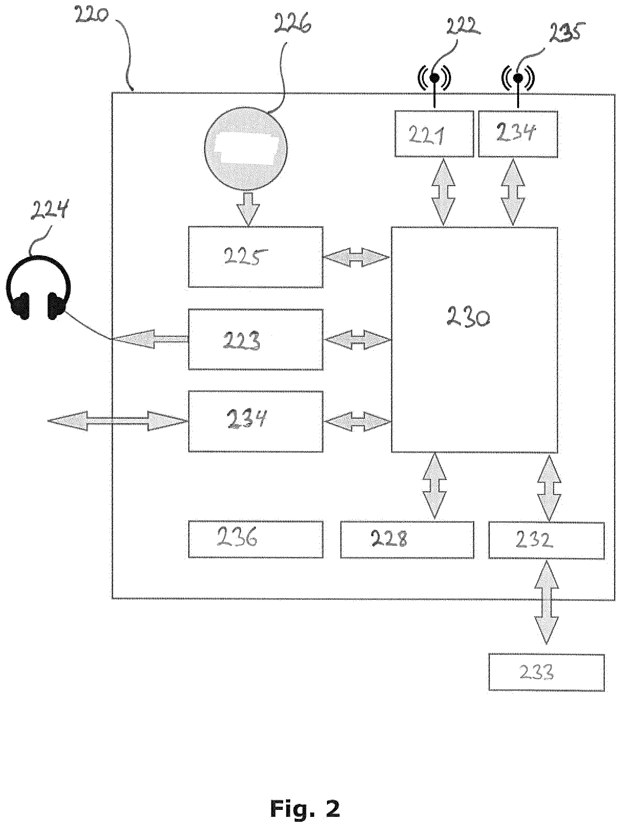

Figur 2 zeigt eine detailliertere Übersicht einer Aufnahmevorrichtung 220 des in der Figur 1 gezeigten Systems 100. Die gezeigte Aufnahmevorrichtung 220 entspricht folglich im Wesentlichen jeder der in Figur 1 gezeigten Aufnahmevorrichtungen 120a, 120b.

Die Aufnahmevorrichtung 220 weist eine zentrale Datenverarbeitungseinheit (Prozessor) 230 auf, die mit einem Bluetooth-Transceiver 221, einem GPS-Receiver 234, einem Analog-Digital-Wandler (ADC) 225, einem Digital-Analog-Wandler (DAC) 223, einer USB-Schnittstelle 234, einem Datenspeicher 228 und einer Benutzerschnittstelle 232 kommunikativ verbunden ist. Der Bluetooth-Transceiver ist mit einer Antenne 222 und der GPS-Receiver mit einer Antenne 235 verbunden. Der GPS-Receiver ermöglicht, dass GPS-Daten (wie Ort, Datum und Uhrzeit) als Metadaten in oder zusammen mit Aufnahmedaten gespeichert werden. Der ADC 225 ist mit einer Mikrofoneinheit 226 zur Aufnahme von Audio verbunden. Der DAC 223 ist mit einem Anschluss für einen Kopfhörer 224 verbunden. Die Benutzerschnittstelle 228 ist mit Bedienungseinheit 233 verbunden, welche Druckknöpfe und LEDs aufweist. Die Aufnahmevorrichtung 220 weist ferner auch eine Stromversorgungseinheit 236 auf, welche die zuvor genannten Bauelemente mit elektrischer Energie versorgt.

Mit Bezug auf sowohl Figur 1 als auch Figur 2 wird ein erfindungsgemäßes Verfahren zur synchronen Aufnahme von Audio jetzt beschrieben. Als erstes werden drahtlose Datenübertragungsverbindungen zwischen der Mastervorrichtung 110 und jeder Aufnahmevorrichtung 120a, 120b aufgebaut. Dann wird für jede Datenübertragungsverbindung eine Datenübertragungsverzögerung bestimmt. Dies kann zum Beispiel so erfolgen, dass die Mastervorrichtung 110 ein Referenzsignal absendet (entweder über die entsprechende drahtlose Datenkommunikationsverbindung oder als ein akustisches Signal) und dann die Zeitdauer misst bis zum Erhalt eines entsprechendes Antwortsignal von der relevanten Aufnahmevorrichtung 120a, 120b. Als nächstes werden vorbestimmte Referenzdaten von der Mastervorrichtung an die erste Aufnahmevorrichtung 120a und an die zweite Aufnahmevorrichtung 120b (mittels der jeweiligen drahtlosen Datenübertragungsverbindung) übertragen. Nach Erhalt dieser vorbestimmten Referenzdaten wird ein entsprechendes Referenz-Audiosignal (zum Beispiel ein Metronom-Signal, ein Click-Track oder ein zuvor aufgenommenes Referenzsignal) bei sowohl der ersten Aufnahmevorrichtung 120a als auch der zweiten Aufnahmevorrichtung 120b synchron abgespielt. Um das synchrone Abspielen des Referenz-Audiosignals zu ermöglichen, werden die bestimmten Datenübertragungsverzögerungen berücksichtigt, insbesondere eine Differenz zwischen der ersten Datenübertragungsverzögerung und der zweiten Datenübertragungsverzögerung. Während das Referenz-Audiosignal abgespielt wird, nehmen beide Aufnahmevorrichtungen (durch Mikrofoneinheit 226) Aufnahmedaten auf und speichern diese im Datenspeicher 228, gegebenenfalls zusammen mit Metadaten basierend auf GPS-Daten vom GPS-Receiver 234. Die Aufnahmedaten können auch über die entsprechende drahtlose Datenübertragungsverbindung an die Mastervorrichtung übertragen werden. Alternativ oder zusätzlich können die Aufnahmedaten über USB-Schnittstelle 234 ausgelesen werden. Anfang und Ende der jeweiligen Aufnahmen können durch Betätigung der Bedienungseinheit 233 durch Benutzer festgelegt werden.

Die genannte Synchronisation kann auf verschiedener Art und Weise basierend auf den bestimmten Datenübertragungsverzögerungen erreicht werden. Eine erste Möglichkeit ist, dass die Übertragung der vorbestimmten Referenzdaten an jede einzelne Aufnahmevorrichtung zeitversetzt erfolgt, wobei der zeitliche Abstand zwischen den Übertragungszeitpunkten gleich der Differenz zwischen den Datenübertragungsverzögerungen ist.

Eine weitere Möglichkeit ist, dass ein individueller Offsetwert zusammen mit den vorbestimmten Referenzdaten an jede Aufnahmevorrichtung übertragen wird. Die Offsetwerte sind so gewählt, dass die Differenz zwischen den Offsetwerten gleich der Differenz zwischen den Datenübertragungsverzögerungen ist. Die einzelne Aufnahmevorrichtung verzögert dann das Abspielen der vorbestimmten Referenzdaten basierend auf dem erhaltenen Offsetwert, so dass das Abspielen der Referenzdaten auch in diesem Fall synchron stattfindet.

## Patentansprüche

1. Verfahren zur synchronen Aufnahme von Audio, das Verfahren aufweisend
Aufbauen einer ersten drahtlosen Datenübertragungsverbindung zwischen einer Mastervorrichtung und einer ersten Aufnahmevorrichtung,
Aufbauen einer zweiten drahtlosen Datenübertragungsverbindung zwischen der Mastervorrichtung und einer zweiten Aufnahmevorrichtung,
Bestimmen einer ersten Datenübertragungsverzögerung für die erste Datenübertragungsverbindung,
Bestimmen einer zweiten Datenübertragungsverzögerung für die zweite Datenübertragungsverbindung,
Übertragen vorbestimmter Referenzdaten von der Mastervorrichtung an die erste Aufnahmevorrichtung und an die zweite Aufnahmevorrichtung,
bei der ersten Aufnahmevorrichtung: Abspielen der vorbestimmten Referenzdaten und Aufnehmen erster Aufnahmedaten, und
bei der zweiten Aufnahmevorrichtung: Abspielen der vorbestimmten Referenzdaten und Aufnehmen zweiter Aufnahmedaten,
wobei beim Übertragen der vorbestimmten Referenzdaten eine Differenz zwischen der ersten Datenübertragungsverzögerung und der zweiten Datenübertragungsverzögerung derart berücksichtigt wird, dass das Abspielen der vorbestimmten Referenzdaten bei der ersten Aufnahmevorrichtung und der zweiten Aufnahmevorrichtung synchron erfolgt.

2. Das Verfahren gemäß dem vorhergehenden Anspruch, wobei die Mastervorrichtung das Übertragen der vorbestimmten Referenzdaten an die erste Aufnahmevorrichtung zu einem ersten Zeitpunkt und das Übertragen der vorbestimmten Referenzdaten an die zweite Aufnahmevorrichtung zu einem zweiten Zeitpunkt einleitet, wobei der zeitliche Abstand zwischen dem ersten Zeitpunkt und dem zweiten Zeitpunkt gleich der Differenz zwischen der ersten Datenübertragungsverzögerung und der zweiten Datenübertragungsverzögerung ist.

3. Das Verfahren gemäß Anspruch 1, wobei die Mastervorrichtung einen ersten Offsetwert zusammen mit den vorbestimmten Referenzdaten an die erste Aufnahmevorrichtung und einen zweiten Offsetwert zusammen mit den vorbestimmten Referenzdaten an die zweite Aufnahmevorrichtung überträgt, wobei die erste Aufnahmevorrichtung das Abspielen der vorbestimmten Referenzdaten entsprechend dem ersten Offsetwert verzögert, wobei die zweite Aufnahmevorrichtung das Abspielen der vorbestimmten Referenzdaten entsprechend dem zweiten Offsetwert verzögert, und wobei eine Differenz zwischen dem ersten Offsetwert und dem zweiten Offsetwert gleich der Differenz zwischen der ersten Datenübertragungsverzögerung und der zweiten Datenübertragungsverzögerung ist.

4. Das Verfahren gemäß einem der vorhergehenden Ansprüche, wobei die ersten Aufnahmedaten in einem Speicher der ersten Aufnahmevorrichtung gespeichert werden und/oder wobei die zweiten Aufnahmedaten in einem Speicher der zweiten Aufnahmevorrichtung gespeichert werden.

5. Das Verfahren gemäß einem der vorhergehenden Ansprüche, ferner aufweisend
Übertragen der ersten Aufnahmedaten von der ersten Aufnahmevorrichtung an die Mastervorrichtung und/oder
Übertragen der zweiten Aufnahmedaten von der zweiten Aufnahmevorrichtung an die Mastervorrichtung.

6. Das Verfahren gemäß dem vorhergehenden Anspruch, wobei das Übertragen der ersten und/oder zweiten Aufnahmedaten kontinuierlich erfolgt.

7. Das Verfahren gemäß Anspruch 5, wobei das Übertragen der ersten und/oder zweiten Aufnahmedaten zeitlich aufgeteilt erfolgt.

8. Das Verfahren gemäß einem der vorhergehenden Ansprüche, wobei das Bestimmen der ersten Datenübertragungsverzögerung folgendes aufweist:
Übertragen eines ersten Referenzsignals von der Mastervorrichtung an die erste Aufnahmevorrichtung,
Empfangen eines ersten Antwortsignals von der ersten Aufnahmevorrichtung bei der Mastervorrichtung und
Bestimmen der ersten Datenübertragungsverzögerung basierend auf einer ersten Zeitdauer zwischen dem Übertragen des ersten Referenzsignals bis zum Empfangen des ersten Antwortsignals und/oder wobei das Bestimmen der zweiten Datenübertragungsverzögerung folgendes aufweist:
Übertragen eines zweiten Referenzsignals von der Mastervorrichtung an die zweite Aufnahmevorrichtung,
Empfangen eines zweiten Antwortsignals von der zweiten Aufnahmevorrichtung bei der Mastervorrichtung und
Bestimmen der zweiten Datenübertragungsverzögerung basierend auf einer zweiten Zeitdauer zwischen dem Übertragen des zweiten Referenzsignals bis zum Empfangen des zweiten Antwortsignals.

9. Das Verfahren gemäß dem vorhergehenden Anspruch, wobei das erste Referenzsignal ein erstes digitales Signal ist, das über die erste Datenübertragungsverbindung übertragen wird, und/oder wobei das zweite Referenzsignal ein zweites digitales Signal ist, das über die erste Datenübertragungsverbindung übertragen wird.

10. Das Verfahren gemäß Anspruch 8, wobei das erste Referenzsignal ein erstes akustisches Signal ist, das von einem Lautsprecher der Mastervorrichtung ausgegeben wird, und das erste Antwortsignal eine Aufnahme des ersten akustischen Signals aufweist und/oder wobei das zweite Referenzsignal ein zweites akustisches Signal ist, das von dem Lautsprecher der Mastervorrichtung ausgegeben wird, und das zweite Antwortsignal eine Aufnahme des zweiten akustischen Signals aufweist.

11. System zum synchronen Aufnehmen von Audio, das System aufweisend
eine erste Aufnahmevorrichtung,
eine zweite Aufnahmevorrichtung und
eine Mastervorrichtung,
wobei die erste Aufnahmevorrichtung, die zweite Aufnahmevorrichtung und die Mastervorrichtung zum Durchführen des Verfahrens gemäß einem der Ansprüche 1 bis 10 eingerichtet sind.

## Claims

1. Method for synchronous recording of audio, the method comprising establishing a first wireless data transmission link between a master device and a first recording device,
establishing a second wireless data transmission link between the master device and a second recording device,
determining a first data transmission delay for the first data transmission link, determining a second data transmission delay for the second data transmission link,
transmitting predetermined reference data from the master device to the first recording device and to the second recording device,
at the first recording device: playing back the predetermined reference data and recording first recording data; and
at the second recording device: playing back the predetermined reference data and recording second recording data,
wherein, when the predetermined reference data is transmitted, a difference between the first data transmission delay and the second data transmission delay is taken into account such that the playback of the predetermined reference data at the first recording device and the second recording device is synchronous.

2. Method according to the preceding claim, wherein the master device initiates the transmission of the predetermined reference data to the first recording device at a first point in time and the transmission of the predetermined reference data to the second recording device at a second point in time, wherein the time gap between the first point in time and the second point in time is equal to the difference between the first data transmission delay and the second data transmission delay.

3. Method according to claim 1, wherein the master device transmits a first offset value together with the predetermined reference data to the first recording device and a second offset value together with the predetermined reference data to the second recording device, wherein the first recording device delays the playback of the predetermined reference data according to the first offset value, wherein the second recording device delays the playback of the predetermined reference data according to the second offset value, and wherein a difference between the first offset value and the second offset value is equal to the difference between the first data transmission delay and the second data transmission delay.

4. Method according to any one of the preceding claims, wherein the first recording data is stored in a memory of the first recording device and/or wherein the second recording data is stored in a memory of the second recording device.

5. Method according to any one of the preceding claims, further comprising transmitting the first recording data from the first recording device to the master device and/or
transmitting the second recording data from the second recording device to the master device.

6. Method according to the preceding claim, wherein the transmission of the first and/or second recording data takes place continuously.

7. Method according to claim 5, wherein the transmission of the first and/or second recording data is split over time.

8. Method according to any one of the preceding claims, wherein the determination of the first data transmission delay comprises the following:
transmitting a first reference signal from the master device to the first recording device,
receiving at the master device a first response signal from the first recording device; and
determining the first data transmission delay based on a first time period between the transmission of the first reference signal and the reception of the first response signal and/or wherein the determination of the second data transmission delay comprises:
transmitting a second reference signal from the master device to the second recording device,
receiving at the master device a second response signal from the second recording device; and
determining the second data transmission delay based on a second time period between the transmission of the second reference signal and the reception of the second response signal.

9. Method according to the preceding claim, wherein the first reference signal is a first digital signal that is transmitted over the first data transmission link and/or wherein the second reference signal is a second digital signal that is transmitted over the first data transmission link.

10. Method of claim 8, wherein the first reference signal is a first acoustic signal output from a speaker of the master device and the first response signal comprises a recording of the first acoustic signal, and/or wherein the second reference signal is a second acoustic signal output from the speaker of the master device and the second response signal comprises a recording of the second acoustic signal.

11. System for synchronous recording of audio, the system comprising
a first recording device
a second recording device, and
a master device,
wherein the first recording device, the second recording device and the master device are adapted to carry out the method according to any one of claims 1 to 10.

## Revendications

1. Procédé d'enregistrement synchrone de signaux audio, le procédé comprenant les étapes consistant à
établir une première connexion de transmission de données sans fil entre un dispositif maître et un premier dispositif d'enregistrement,
établir une seconde connexion de transmission de données sans fil entre le dispositif maître et un second dispositif d'enregistrement,
déterminer un premier retard de transmission de données pour la première connexion de transmission de données,
établir un second retard de transmission de données pour la seconde connexion de transmission de données,
transmettre des données de référence prédéterminées du dispositif maître au premier dispositif d'enregistrement et au second dispositif d'enregistrement,
pour le premier dispositif d'enregistrement : lire les données de référence prédéterminées et enregistrer des premières données d'enregistrement, et pour le second dispositif d'enregistrement, lire les données de référence prédéterminées et enregistrer des secondes données d'enregistrement,
dans lequel, lors de la transmission des données de référence prédéterminées, une différence entre le premier retard de transmission de données et le second retard de transmission de données est prise en compte de telle sorte que la lecture des données de référence prédéterminées pour le premier dispositif d'enregistrement et le second dispositif d'enregistrement s'effectue de manière synchrone.

2. Procédé selon la revendication précédente, dans lequel le dispositif maître lance la transmission des données de référence prédéterminées au premier dispositif d'enregistrement à un premier moment et la transmission des données de référence prédéterminées au second dispositif d'enregistrement à un second moment, dans lequel l'écart temporel entre le premier moment et le second moment est égal à la différence entre le premier retard de transmission de données et le second retard de transmission de données.

3. Procédé selon la revendication 1, dans lequel le dispositif maître transmet une première valeur de décalage conjointement avec les données de référence prédéterminées au premier dispositif d'enregistrement et une seconde valeur de décalage conjointement avec les données de référence prédéterminées au second dispositif d'enregistrement, dans lequel le premier dispositif d'enregistrement retarde la lecture des données de référence prédéterminées en correspondance avec la première valeur de décalage, dans lequel le second dispositif d'enregistrement retarde la lecture des données de référence prédéterminées en correspondance avec la seconde valeur de décalage, et dans lequel une différence entre la première valeur de décalage et la seconde valeur de décalage est égale à la différence entre le premier retard de transmission de données et le second retard de transmission de données.

4. Procédé selon l'une quelconque des revendications précédentes, dans lequel les premières données d'enregistrement sont enregistrées dans une mémoire du premier dispositif d'enregistrement et/ou dans lequel les secondes données d'enregistrement sont enregistrées dans une mémoire du second dispositif d'enregistrement.

5. Procédé selon l'une quelconque des revendications précédentes, comprenant en outre les étapes consistant à
transmettre les premières données d'enregistrement du premier dispositif d'enregistrement au dispositif maître et/ou
transmettre les secondes données d'enregistrement du second dispositif d'enregistrement au dispositif maître.

6. Procédé selon l'une quelconque des revendications précédentes, dans lequel la transmission des premières et/ou des secondes données d'enregistrement s'effectue en continu.

7. Procédé selon la revendication 5, dans lequel la transmission des premières et/ou des secondes données d'enregistrement s'effectue de manière fractionnée.

8. Procédé selon l'une quelconque des revendications précédentes,
dans lequel la détermination du premier retard de transmission de données comprend les étapes suivantes consistant à :
transmettre un premier signal de référence du dispositif maître au premier dispositif d'enregistrement,
recevoir un premier signal de réponse du premier dispositif d'enregistrement au niveau du dispositif maître et
déterminer le premier retard de transmission de données sur la base d'un premier laps de temps entre la transmission du premier signal de référence jusqu'à la réception du premier signal de réponse et/ou
dans lequel la détermination du second retard de transmission de données comprend les étapes suivantes consistant à :
transmettre un second signal de référence du dispositif maître au second dispositif d'enregistrement,
recevoir un second signal de réponse du second dispositif d'enregistrement au niveau du dispositif maître et
déterminer le second retard de transmission de données sur la base d'un second laps de temps entre la transmission du second signal de référence jusqu'à la réception du second signal de réponse.

9. Procédé selon l'une quelconque des revendications précédentes, dans lequel le premier signal de référence est un premier signal numérique qui est transmis via la première connexion de transmission de données, et/ou dans lequel le second signal de référence est un second signal numérique qui est transmis via la première connexion de transmission de données.

10. Procédé selon la revendication 8, dans lequel le premier signal de référence est un premier signal acoustique qui est émis depuis un haut-parleur du dispositif maître, et le premier signal de réponse comprend un enregistrement du premier signal acoustique et/ou dans lequel le second signal de référence est un second signal acoustique qui est émis depuis le haut-parleur du dispositif maître, et le second signal de réponse comprend un enregistrement du second signal acoustique.

11. Système pour un enregistrement synchrone de signaux audio, le système comprenant
un premier dispositif d'enregistrement,
un second dispositif d'enregistrement et
un dispositif maître,
dans lequel le premier dispositif d'enregistrement, le second dispositif d'enregistrement et le dispositif maître sont configurés pour exécuter le procédé selon l'une quelconque des revendications 1 à 10.
